# EUROPÄISCHE PATENTANMELDUNG

(11) **EP 4 481 977 A1**
(43) Veröffentlichungstag der Anmeldung: **25.12.2024**
(21) Anmeldenummer: 23180584.7
(22) Anmeldetag: 21.06.2023
(51) Int. Cl.: H02J 3/38, H02B 1/16, H02S 40/30

(54) **NETZTRENNEINRICHTUNG**

(71) Anmelder: enwitec electronic GmbH, 84329 Rogglfing (DE)
(72) Erfinder: Wimmer, Johann, 84329 Rogglfing (DE)
(74) Vertreter: Rothkopf, Ferdinand

(57) **Zusammenfassung**

Die Erfindung betrifft eine Netztrenneinrichtung zum Trennen oder Verbinden eines Stromnetzes (10) von oder mit einem Inselstromnetz (20), mit mindestens einem Außenleiter (12) des Stromnetzes (10) und mindestens einem Außenleiter (18) des Inselstromnetzes (20), einem Neutralleiter (14) des Stromnetzes (10) und einem Neutralleiter (22) des Inselstromnetzes (20) und einem Schalter (16) zwischen Stromnetz (10) und Inselstromnetz (20), wobei mittels des Schalters (16) der zumindest eine Außenleiter (12) und der Neutralleiter (14) des Stromnetzes (10) je nach Stellung des Schalters (16) jeweils mit dem zumindest einen Außenleiter (18) und dem Neutralleiter (22) des Inselstromnetzes (20) verbunden oder getrennt schaltbar sind, und wobei zumindest ein zusätzliches erstes Verbindungselement (26, 28) vorgesehen ist, mittels welchem unabhängig von der Stellung des Schalters (16) der Neutralleiter (14) des Stromnetzes (10) und der Neutralleiter (22) des Inselstromnetzes (20) optional verbindbar sind.

## Beschreibung

### Hintergrund der Erfindung

Die Erfindung betrifft eine Netztrenneinrichtung zum Trennen eines mit Wechselstrom betriebenen, üblicherweise öffentlichen, Stromnetzes mit einem gekoppelten, ebenfalls mit Wechselstrom betriebenen Inselstromnetzes als lokalem Stromnetz, beispielsweise einer Photovoltaik-Anlage.

Unter dem Begriff "Stromnetz" bzw. "öffentliches Stromnetz" wird vorliegend ein Stromnetz verstanden, bei dem von einem Stromversorger bzw. Stromanbieter, insbesondere aber nicht ausschließlich in öffentlicher Weise, an einen lokalen Verbraucher elektrischer Strom angeboten und geliefert wird.

Das "Inselstromnetz" bzw. "lokale Stromnetz" ist demgegenüber erheblich kleiner gestaltet. Hier relevante lokale Stromnetze weisen einen Anschluss-Leistungsbedarf von zwischen 10 und 1000 kW, insbesondere zwischen 20 und 500 kW, auf.

Öffentliche Stromnetze werden dazu verwendet, um von einem oder mehreren, weitgehend zentralen Stromversorgern, wie beispielsweise Kraftwerken, kleinere oder auch größere lokale Stromnetze mit elektrischem Strom zu versorgen. Der elektrische Strom wird am lokalen Stromnetz gewöhnlich als Wechselstrom, insbesondere mit einer Spannung von ca. 230 Volt (V) und einer Frequenz von ca. 50 bis 60 Hertz (Hz) bereitgestellt. Das jeweilige lokale Stromnetz kann gewöhnlich eine oder mehrere Wohn- oder Gewerbeeinheiten beinhalten.

Beim Anschluss von lokalen Inselstromnetzen an öffentlichen Stromnetzen muss sichergestellt sein, dass sowohl die Abnahme von elektrischem Strom aus dem öffentlichen Stromnetz heraus als auch gegebenenfalls die Einspeisung von elektrischem Strom in das öffentliche Stromnetz hinein ohne Störungen erfolgen kann. Sobald bei einem lokalen Inselstromnetz beispielsweise Stromerzeuger-Anlagen oder Stromspeicher-Anlagen, wie etwa eine Photovoltaik-Anlage oder eine Batterie-Anlage integriert sind, ist ein hoher Aufwand für die elektrische Absicherung erforderlich, insbesondere was den Schutz gegen Überspannungen und die Erdung betrifft.

### Zugrundeliegende Aufgabe

Der Erfindung liegt die Aufgabe zugrunde, eine Netztrenneinrichtung zwischen lokalen Inselstromnetzen und dem öffentlichen Stromnetz zu schaffen, welche auf konstruktiv einfache Art einen sicheren und flexiblen Betrieb sowie eine sichere und flexible Verbindung und Trennung dieser Netze ermöglicht.

### Erfindungsgemäße Lösung

Diese Aufgabe ist erfindungsgemäß mit einer Netztrenneinrichtung zum Trennen und Koppeln eines mit Wechselstrom betriebenen öffentlichen Stromnetzes mit einem ebenfalls mit Wechselstrom betriebenen Inselstromnetzes gelöst, bei der neben einem herkömmlichen Schalter zusätzlich zumindest ein erstes zusätzliches Verbindungselement, im folgenden zusätzliches erstes Verbindungselement genannt, zur Verbindung nur des Neutralleiters des Inselstromnetzes und des Neutralleiters des Stromnetzes zwischen Inselstromnetz und Stromnetz verbindbar vorgesehen ist, auch wenn das Inselstromnetz vom Stromnetz ansonsten durch den herkömmlichen Schalter getrennt sein sollte.

Somit ist eine Erdung des Inselstromnetzes alternativ über den Neutralleiter des Stromnetzes auch bei eigentlicher Trennung der Außenleiter des Inselstromnetzes vom Stromnetz möglich.

Dabei ist die Netztrenneinrichtung zum Trennen oder Verbinden eines Stromnetzes von oder mit einem Inselstromnetz mit mindestens einem Außenleiter des Stromnetzes und mindestens einem Außenleiter des Inselstromnetzes, einem Neutralleiter des Stromnetzes und einem Neutralleiter des Inselstromnetzes und einem Schalter zwischen Stromnetz und Inselstromnetz vorgesehen, wobei mittels des Schalters der zumindest eine Außenleiter und der Neutralleiter des Stromnetzes je nach Stellung des Schalters jeweils mit dem zumindest einen Außenleiter und dem Neutralleiter des Inselstromnetzes verbunden oder getrennt schaltbar sind, und wobei zumindest ein zusätzliches erstes Verbindungselement vorgesehen ist, mittels welchem unabhängig von der Stellung des Schalters optional der Neutralleiter des Stromnetzes und der Neutralleiter des Inselstromnetzes verbindbar sind.

Als Schalter kann dabei beispielsweise ein Netzschalter oder eine anderweitige Netzentkopplung vorgesehen sein, wie z.B. ein Schütz, ein Leistungsschalter, ein Lasttrennschalter oder Ähnliches.

Mit der erfindungsgemäßen Lösung ist also gewährleistet, dass eine Erdung des Inselstromnetzes immer gewährleistet sein kann und ein flexibler Betrieb des Inselstromnetzes im Zusammenwirken mit dem öffentlichen Stromnetz jederzeit sicher möglich ist.

### Vorteilhafte Weiterbildungen der Erfindung

Bei einer vorteilhaften Weiterbildung der Erfindung ist eine Erdungseinrichtung des Inselstromnetzes über ein zusätzliches zweites Verbindungselement mit dem Neutralleiter des Inselstromnetzes verbindbar. Somit ist auch eine Erdung des Inselstromnetzes beispielsweise lokal über diese Erdungseinrichtung des Inselstromnetzes möglich, was besonders flexible Einsatzmöglichkeiten bietet. Die lokale Erdung des Inselstromnetzes über die Erdungseinrichtung des Inselstromnetzes kann dabei alternativ zur globalen Erdung über den Neutralleiter des Stromnetzes erfolgen, insbesondere auch unabhängig von der Stellung des Schalters bzw. wenn dieser getrennt ist.

Gemäß einer weiteren bevorzugten Weiterbildung der erfindungsgemäßen Netztrenneinrichtung ist das zusätzliche erste Verbindungselement und das zusätzliche zweite Verbindungselement ein einzelnes zusätzliches Verbindungselement, wobei dieses einzelne zusätzliche Verbindungselement wechselweise entweder an der Stelle des zusätzlichen ersten Verbindungselements oder an Stelle des zusätzlichen zweiten Verbindungselements angeordnet ist. Somit kann eindeutig und einfach kontrollierbar entweder eine Erdung des Inselstromnetzes über den Neutralleiter des Stromnetzes oder über die Erdungseinrichtung des Inselstromnetzes erfolgen.

Erfindungsgemäß bevorzugt ist das zusätzliche erste Verbindungselement und/oder das zusätzliche zweite Verbindungselement bzw. das zusätzliche einzelne Verbindungselement ein Steckbrückenverbinder. Solche Steckbrückenverbinder sind als Standardbauteile leicht verfügbar.

Zur möglichen Automatisierung des Betriebs kann gemäß einer anderen bevorzugten Weiterbildung der Erfindung das zusätzliche erste Verbindungselement und/oder das zusätzliche zweite Verbindungselement auch ein Schalter sein.

Besonders konstruktiv flexibel ist eine erfindungsgemäß bevorzugte Ausführungsform der Netztrenneinrichtung wobei zumindest ein mit dem Neutralleiter des Inselstromnetzes oder mit dem Neutralleiter des Stromnetzes verbundener Zusatzneutralleiter vorgesehen ist, mittels welchem unabhängig von der Stellung des Schalters der Neutralleiter des Stromnetzes und der Neutralleiter des Inselstromnetzes über das zusätzliche erste Verbindungselement verbindbar sind.

Gemäß einer bevorzugten Weiterbildung der erfindungsgemäßen Netztrenneinrichtung ist der Außenleiter sowohl des Stromnetzes als auch des Inselstromnetzes ein zweipoliger oder dreipoliger Leiter und der Schalter ein vierpoliger Schalter, mittels welchem der zweipolige oder dreipolige Leiter und der Neutralleiter sowohl des Stromnetzes als auch des Inselstromnetzes je nach Stellung des Schalters als Trennung oder Verbindung zwischen Stromnetz und Inselstromnetz schaltbar sind. Dies erlaubt den Einsatz von standardisierten vierpoligen Schaltern, welche besonders kostengünstig sind.

Eine bevorzugte Weiterbildung beinhaltet, dass das zusätzliche erste Verbindungselement und/oder das zusätzliche zweite Verbindungselement verriegelbar ist, bevorzugt gegenseitig verriegelbar sind. Somit kann sichergestellt werden, dass zuverlässig entweder eine Erdung des Inselstromnetzes über das Stromnetz global oder über die Erdungseinrichtung des Inselstromnetzes lokal erfolgt.

Gemäß einer weiter bevorzugten Weiterbildung der erfindungsgemäßen Netztrenneinrichtung sind der Schalter und das zusätzliche erste Verbindungselement sowie das zusätzliche zweite Verbindungselement zeitgleich bedienbar ausgeführt. Somit kann sichergestellt werden, dass zuverlässig entweder eine Erdung des Inselstromnetzes über das Stromnetz global oder über die Erdungseinrichtung des Inselstromnetzes lokal erfolgt und keine Erdungsschleife über eine Doppelerdung vorliegt.

Besonders zuverlässig ist eine Weiterbildung der Erfindung, bei welcher die Erdungseinrichtung des Inselstromkreises eine Sternpunkterdung bildet. Dabei kann es sich besonders bevorzugt um eine Sernpunkterdung eines dezentralen Erzeugers des Inselstromnetzes handeln, wie etwa eines Wechselrichters mit Durchstromeingang.

### Kurzbeschreibung der Zeichnungen

Nachfolgend wird ein Ausführungsbeispiel einer erfindungsgemäßen Lösung anhand der beigefügten schematischen Zeichnungen näher erläutert. Es zeigt:

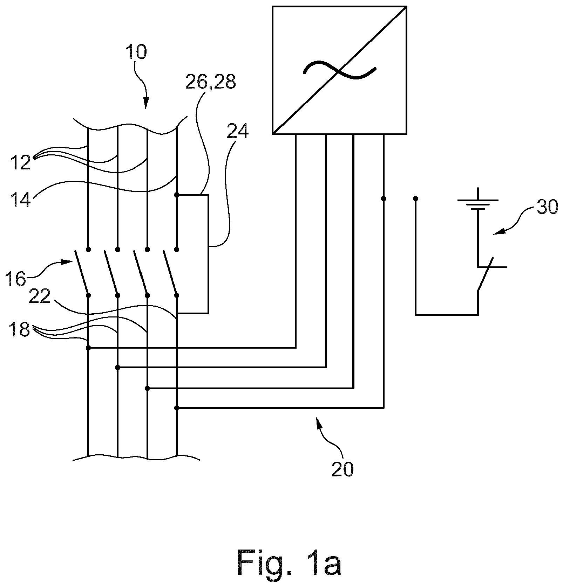

Fig. 1a eine schematische Darstellung einer Netztrenneinrichtung gemäß einer Ausführungsform der Erfindung in einem ersten Betriebszustand, und

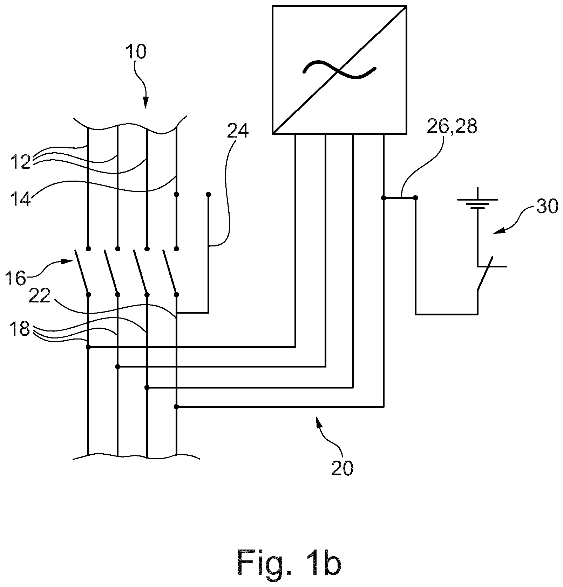

Fig. 1b eine schematische Darstellung einer Netztrenneinrichtung gemäß einer Ausführungsform der Erfindung in einem zweiten Betriebszustand.

### Detaillierte Beschreibung des Ausführungsbeispiels

Fig.1a ist eine schematische Darstellung einer Netztrenneinrichtung gemäß einer Ausführungsform der Erfindung in einem ersten Betriebszustand mit globaler Erdung und Fig. 1b ist eine schematische Darstellung einer Netztrenneinrichtung gemäß einer Ausführungsform der Erfindung in einem zweiten Betriebszustand mit lokaler Erdung.

Die Netztrenneinrichtung dient zum Trennen bzw. Verbinden eines Stromnetzes 10 von bzw. mit einem Inselstromnetz 20. Mindestens ein Außenleiter 12, 18 jeweils des Stromnetzes 10 bzw. des Inselstromnetzes 20, ein Neutralleiter 14, 22 jeweils des Stromnetzes 10 bzw. des Inselstromnetzes 20 und ein Schalter 16 zwischen Stromnetz 10 und Inselstromnetz 20 sind vorgesehen. Mittels des Schalters 20 wird der zumindest eine Außenleiter 12 und der Neutralleiter 14 des Stromnetzes 10 je nach Stellung des Schalters 16 jeweils mit dem zumindest einen Außenleiter 18 und dem Neutralleiter 22 des Inselstromnetzes 20 verbunden oder getrennt geschaltet. Erfindungsgemäß ist zumindest ein zusätzliches erstes Verbindungselement 26, 28 vorgesehen, mittels welchem optional unabhängig von der Stellung des Schalters 16 der Neutralleiter 14 des Stromnetzes 10 und der Neutralleiter 22 des Inselstromnetzes 20 verbindbar sind.

Gemäß der in den Figs.1a und 1b gezeigten Ausführungsform kann außerdem ein zumindest mit dem Neutralleiter 22 des Inselstromnetzes 20 verbundener Zusatzneutralleiter 24 vorgesehen sein, mittels welchem unabhängig von der Stellung des Schalters 16 der Neutralleiter 14 des Stromnetzes 10 und der Neutralleiter 22 des Inselstromnetz 20 über das zusätzliche erste Verbindungselement 26, 28 verbindbar sind.

In dem in Fig. 1a gezeigten Betriebszustand ist der Schalter 16 geöffnet und das Inselstromnetz 20 ist über den Neutralleiter 22, den Zusatzneutralleiter 24, das zusätzliche erste Verbindungselement 26, 28 und den Neutralleiter 14 über das Stromnetz 10 global geerdet.

Eine Erdungseinrichtung 30 des Inselstromnetzes 20 kann über ein zusätzliches zweites Verbindungselement 26, 28 mit dem Neutralleiter 22 des Inselstromnetzes 20 verbindbar sein.

In dem in Fig. 1b gezeigten Betriebszustand ist der Schalter 16 geöffnet und das Inselstromnetz 20 ist über den Neutralleiter 22, das zusätzliche zweite Verbindungselement 26, 28 und die Erdungseinrichtung 30 lokal geerdet.

Das zusätzliche erste Verbindungselement 26, 28 und das zusätzliche zweite Verbindungselement 26, 28 ist in den in Figs. 1a und 1b gezeigten Darstellungen ein zusätzliches einzelnes Verbindungselement 28, nämlich ein an sich bekannter Steckbrückenverbinder, wobei dieses zusätzliche einzelne Verbindungselement 28 wechselweise entweder an der Stelle des zusätzlichen ersten Verbindungselements 26, 28 (Betriebszustand der Fig. 1a) oder an Stelle des zusätzlichen zweiten Verbindungselements 26, 28 (Betriebszustand der Fig. 1b) angeordnet ist. Gemäß einer nicht gezeigten Ausführungsform der Erfindung könnte das zusätzliche erste Verbindungselement 26, 28 und/oder das zusätzliche zweite Verbindungselement 26, 28 auch ein Schalter sein.

Der in den Figs. 1a und 1b gezeigte Außenleiter 12, 18 sowohl des Stromnetzes 10 als auch des Inselstromnetzes 20 ist ein dreipoliger Leiter und der Schalter 16 ein vierpoliger Schalter, mittels welchem der dreipolige Leiter und der Neutralleiter 14, 22 sowohl des Stromnetzes 10 als auch des Inselstromnetzes 20 je nach Stellung des Schalters 16 als Trennung oder Verbindung zwischen Stromnetz 10 und Inselstromnetz 20 schaltbar sind.

Mit der gezeigten erfindungsgemäßen Netztrenneinrichtung ist eine Erdung des Inselstromnetzes immer gewährleistet und ein flexibler Betrieb des Inselstromnetzes im Zusammenwirken mit dem öffentlichen Stromnetz jederzeit sicher möglich.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Stromnetz
- 12: Außenleiter Stromnetz
- 14: Neutralleiter Stromnetz
- 16: Schalter
- 18: Außenleiter Inselstromnetz
- 20: Inselstromnetz
- 22: Neutralleiter Inselstromnetz
- 24: Zusatzneutralleiter
- 26: zusätzliches erstes, zusätzliches zweites Verbindungselement
- 28: zusätzliches einzelnes Verbindungselement
- 30: Erdungseinrichtung Inselstromnetz

## Patentansprüche

1. Netztrenneinrichtung zum Trennen oder Verbinden eines Stromnetzes (10) von oder mit einem Inselstromnetz (20), mit mindestens einem Außenleiter (12) des Stromnetzes (10) und mindestens einem Außenleiter (18) des Inselstromnetzes (20), einem Neutralleiter (14) des Stromnetzes (10) und einem Neutralleiter (22) des Inselstromnetzes (20) und einem Schalter (16) zwischen Stromnetz (10) und Inselstromnetz (20),
**dadurch gekennzeichnet, dass** mittels des Schalters (16) der zumindest eine Außenleiter (12) und der Neutralleiter (14) des Stromnetzes (10) je nach Stellung des Schalters (16) jeweils mit dem zumindest einen Außenleiter (18) und dem Neutralleiter (22) des Inselstromnetzes (20) verbunden oder getrennt schaltbar sind, wobei zumindest ein zusätzliches erstes Verbindungselement (26, 28) vorgesehen ist, mittels welchem unabhängig von der Stellung des Schalters (16) der Neutralleiter (14) des Stromnetzes (10) und der Neutralleiter (22) des Inselstromnetzes (20) verbindbar sind.

2. Netztrenneinrichtung nach Anspruch 1,
**dadurch gekennzeichnet, dass** eine Erdungseinrichtung (30) des Inselstromnetzes (20) über ein zusätzliches zweites Verbindungselement (26, 28) mit dem Neutralleiter (22) des Inselstromnetzes (20) verbindbar ist.

3. Netztrenneinrichtung nach Anspruch 2,
**dadurch gekennzeichnet, dass** das zusätzliche erste Verbindungselement (26, 28) und das zusätzliche zweite Verbindungselement (26, 28) ein zusätzliches einzelnes Verbindungselement (28) ist, wobei dieses zusätzliche einzelne Verbindungselement (28) wechselweise entweder an der Stelle des zusätzlichen ersten Verbindungselements (26, 28) oder an Stelle des zusätzlichen zweiten Verbindungselements (26, 28) angeordnet ist.

4. Netztrenneinrichtung nach zumindest einem der Ansprüche 1 bis 3, **dadurch gekennzeichnet, dass** zumindest ein mit dem Neutralleiter (22) des Inselstromnetzes (20) oder mit dem Neutralleiter (14) des Stromnetzes (10) verbundener Zusatzneutralleiter (24) vorgesehen ist, mittels welchem unabhängig von der Stellung des Schalters (16) der Neutralleiter (14) des Stromnetzes (10) und der Neutralleiter (22) des Inselstromnetzes (20) über das zusätzliche erste Verbindungselement (26, 28) verbindbar sind.

5. Netztrenneinrichtung nach zumindest einem der Ansprüche 1 bis 4 oder 2 bis 4,
**dadurch gekennzeichnet, dass** das zusätzliche erste Verbindungselement (26, 28) und/oder das zusätzliche zweite Verbindungselement (26, 28) oder das zusätzliche einzelne Verbindungselement (28) ein Steckbrückenverbinder ist.

6. Netztrenneinrichtung nach zumindest einem der Ansprüche 1 bis 4 oder 2 bis 4,
**dadurch gekennzeichnet, dass** das zusätzliche erste Verbindungselement (26, 28) und/oder das zusätzliche zweite Verbindungselement (26, 28) ein Schalter ist.

7. Netztrenneinrichtung nach zumindest einem der Ansprüche 1 bis 6, **dadurch gekennzeichnet, dass** der Außenleiter (12, 18) sowohl des Stromnetzes (10) als auch des Inselstromnetzes (20) ein zweipoliger oder dreipoliger Leiter ist und der Schalter (16) ein vierpoliger Schalter ist, mittels welchem der zweipolige oder dreipolige Leiter und der Neutralleiter (14, 22) sowohl des Stromnetzes (10) als auch des Inselstromnetzes (20) je nach Stellung des Schalters (16) als Trennung oder Verbindung zwischen Stromnetz (10) und Inselstromnetz (20) schaltbar sind.

8. Netztrenneinrichtung nach zumindest einem der Ansprüche 2 bis 7, **dadurch gekennzeichnet, dass** das zusätzliche erste Verbindungselement (26, 28) und/oder das zusätzliche zweite Verbindungselement (26, 28) verriegelbar ist, bevorzugt gegenseitig verriegelbar sind.

9. Netztrenneinrichtung nach zumindest einem der Ansprüche 2 bis 8, **dadurch gekennzeichnet, dass** der Schalter (16) und das zusätzliche erste Verbindungselement (26, 28) sowie das zusätzliche zweite Verbindungselement (26, 28) zeitgleich bedienbar ausgeführt sind.

10. Netztrenneinrichtung nach zumindest einem der Ansprüche 2 bis 9, **dadurch gekennzeichnet, dass** die Erdungseinrichtung (30) des Inselstromkreises (20) eine Sternpunkterdung bildet.
